# EUROPEAN PATENT APPLICATION

(11) **EP 4 250 798 A1**
(43) Date of publication of application: **27.09.2023**
(21) Application number: 21894054.2
(22) Date of filing: 22.11.2021
(51) Int. Cl.: H04W 24/02, G06N 3/08, G06F 16/215

(54) **METHOD FOR PROCESSING PARTIAL INPUT MISSING OF AI NETWORK, AND DEVICE**

(30) Priority: 23.11.2020 CN 202011323033
(71) Applicant: Vivo Mobile Communication Co., Ltd., Dongguan, Guangdong 523863 (CN)
(72) Inventor: YANG, Ang, Dongguan, Guangdong 523863 (CN)
(74) Representative: Murgitroyd & Company
(86) International application number: PCT/CN2021/132012
(87) International publication number: WO 2022/105907

(57) **Abstract**

Embodiments of this application disclose a method for processing partial input missing of an AI network, and a device, which can resolve a problem that input missing of an AI network affects performance of the AI network. The method includes: in a case that there is a missing input in a plurality of inputs of an AI network, replacing, by a first communication device, the missing input with a target input or a default value to obtain an output of the AI network.

## Description

### CROSS-REFERENCE TO RELATED APPLICATION

This application claims priority to Chinese Patent Application No. 202011323033.1, entitled "METHOD FOR PROCESSING PARTIAL INPUT MISSING OF AI NETWORK, AND DEVICE" filed in China on November 23, 2020, which is incorporated herein by reference in its entirety.

### TECHNICAL FIELD

This application belongs to the field of communication technologies, and in particular, to a method for processing partial input missing of an AI network, and a device.

### BACKGROUND

Artificial intelligence (Artificial Intelligence, AI) is a new technical science that studies and develops theories, methods, technologies, and application systems for simulating, extending, and expanding human intelligence. Applying AI networks to actual services can resolve a variety of problems in various fields.

In the field of communication, it is beneficial to improve performance of a communication system by introducing an AI network into a communication procedure. However, currently, in a practical environment, continuity of resource allocation cannot be ensured. For example, a time domain is discontinuous, or a frequency domain is discontinuous. Consequently, input missing of an AI network is caused, greatly affecting performance of the AI network.

### SUMMARY

Embodiments of this application provide a method for processing partial input missing of an AI network, and a device, which can resolve a problem that input missing of an AI network affects performance of the AI network.

According to a first aspect, a method for processing partial input missing of an AI network is provided, where the method includes: in a case that there is a missing input in a plurality of inputs of an AI network, replacing, by a first communication device, the missing input with a target input or a default value to obtain an output of the AI network.

According to a second aspect, a first communication device is provided, including: a processing module, configured to: in a case that there is a missing input in a plurality of inputs of an AI network, replace the missing input with a target input or a default value to obtain an output of the AI network.

According to a third aspect, a terminal is provided, where the terminal includes a processor, a memory, and a program or an instruction stored in the memory and executable on the processor, and when the program or the instruction is executed by the processor, the method according to the first aspect is implemented.

According to a fourth aspect, a network side device is provided, where the network side device includes a processor, a memory, and a program or an instruction stored in the memory and executable on the processor, and when the program or the instruction is executed by the processor, the method according to the first aspect is implemented.

According to a fifth aspect, a readable storage medium is provided, where the readable storage medium stores a program or an instruction, and when the program or the instruction is executed by a processor, the method according to the first aspect is implemented.

According to a sixth aspect, a computer program product is provided, where the computer program product includes a processor, a memory, and a program or an instruction stored in the memory and executable on the processor, and when the program or the instruction is executed by the processor, the method according to the first aspect is implemented.

According to a seventh aspect, a chip is provided, where the chip includes a processor and a communication interface, the communication interface is coupled to the processor, and the processor is configured to run a program or an instruction to implement the method according to the first aspect.

In the embodiments of this application, in a case that there is a missing input in a plurality of inputs of the AI network, the first communication device replaces the foregoing missing input with a target input or a default value to obtain an output of the AI network. Setting the target input or the default value can effectively resolve the problem of input missing caused by discontinuous resource allocation in an actual environment, helping improve performance of the AI network and improve performance of a communication system.

### BRIEF DESCRIPTION OF THE DRAWINGS

FIG. 1 is a schematic diagram of a wireless communication system according to an embodiment of this application;
FIG. 2 is a schematic flowchart of a method for processing partial input missing of an AI network according to an embodiment of this application;
FIG. 3 is a schematic diagram of partial input missing of an AI network according to an embodiment of this application;
FIG. 4 is a schematic structural diagram of a first communication device according to an embodiment of this application;
FIG. 5 is a schematic structural diagram of a communication device according to an embodiment of this application;
FIG. 6 is a schematic structural diagram of a terminal according to an embodiment of this application; and
FIG. 7 is a schematic structural diagram of a network side device according to an embodiment of this application.

### DETAILED DESCRIPTION

The technical solutions in the embodiments of this application are clearly described below with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

In this specification and the claims of this application, the terms "first", "second", and so on are intended to distinguish similar objects but do not necessarily indicate a specific order or sequence. It should be understood that the data termed in such a way is interchangeable in proper circumstances, so that the embodiments of this application can be implemented in other sequences than the sequence illustrated or described herein. In addition, the objects distinguished by "first" and "second" are usually of one type, and there is no limitation on quantities of the objects. For example, there may be one or more first objects. In addition, "and/or" in this specification and the claims indicate at least one of the connected objects, and the character "/" usually indicates an "or" relationship between the associated objects.

It should be noted that, the technologies described in the embodiments of this application are not limited to a Long Term Evolution (Long Term Evolution, LTE)/LTE-Advanced (LTE-Advanced, LTE-A) system, and can be further used in other wireless communication systems, such as Code Division Multiple Address (Code Division Multiple Access, CDMA), Time Division Multiple Access (Time Division Multiple Access, TDMA), Frequency Division Multiple Access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the described technologies can be used not only for the above-mentioned systems and radio technologies, but also for other systems and radio technologies. The following description describes a New Radio (New Radio, NR) system for exemplary purposes, and uses NR terms in most of the following descriptions, but these technologies are also applicable to applications other than the NR system application, such as a 6-th generation (6-th Generation, 6G) communication system.

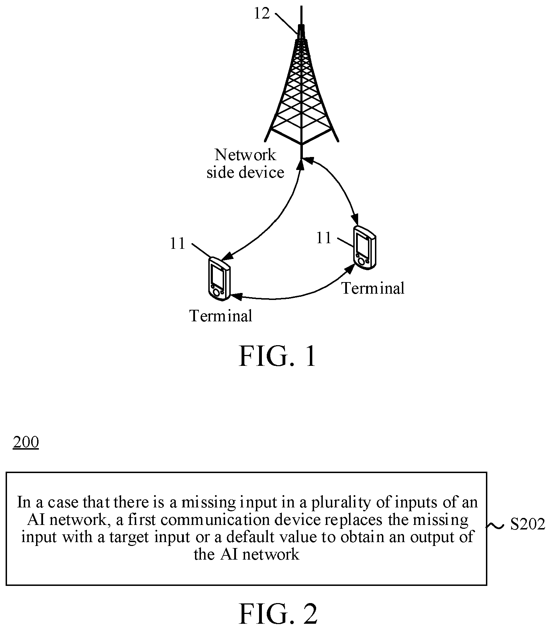

FIG. 1 is a schematic diagram of a wireless communication system to which an embodiment of this application is applicable. The wireless communication system includes a terminal 11 and a network side device 12. The terminal 11 may also be referred to as a terminal device or a user terminal (User Equipment, UE). The terminal 11 may be a mobile phone, a tablet computer (Tablet Personal Computer), a laptop computer (Laptop Computer) or referred to as a notebook computer, a personal digital assistant (Personal Digital Assistant, PDA), a palmtop computer, an netbook, an ultra-mobile personal computer (ultra-mobile personal computer, UMPC), a mobile Internet device (Mobile Internet Device, MID), a wearable device (Wearable Device), or vehicular user equipment (VLTE), pedestrian user equipment (PUE), and other terminal-side devices. The wearable device includes bands, headsets, glasses, or the like. It should be noted that, a specific type of the terminal 11 is not limited in this embodiment of this application. The network side device 12 may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a generation nodeB (gNB), a home node B, a home evolved node B, a WLAN access point, a Wi-Fi node, a transmitting/receiving point (Transmitting Receiving Point, TRP), or some other suitable term in the field, provided that a same technical effect is achieved. The base station is not limited to a specific technical term. It should be noted that, in this embodiment of this application, only a base station in an NR system is used as an example, but the specific type of the base station is not limited.

A method for processing partial input missing (that is, there is a missing input) of an AI (Artificial Intelligence, AI) network, and a device provided in the embodiments of this application are described in detail below with reference to the accompanying drawings through specific embodiments and application scenarios thereof.

As shown in FIG. 2, an embodiment of this application provides a method 200 for processing partial input missing of an AI network. The method may be performed by a first communication device. In other words, the method may be performed by software or hardware installed in the first communication device. The first communication device may be a terminal, or may be a network side device. The method includes the following steps:
S202: In a case that there is a missing input in a plurality of inputs of an AI network, a first communication device replaces the missing input with a target input or a default value to obtain an output of the AI network.

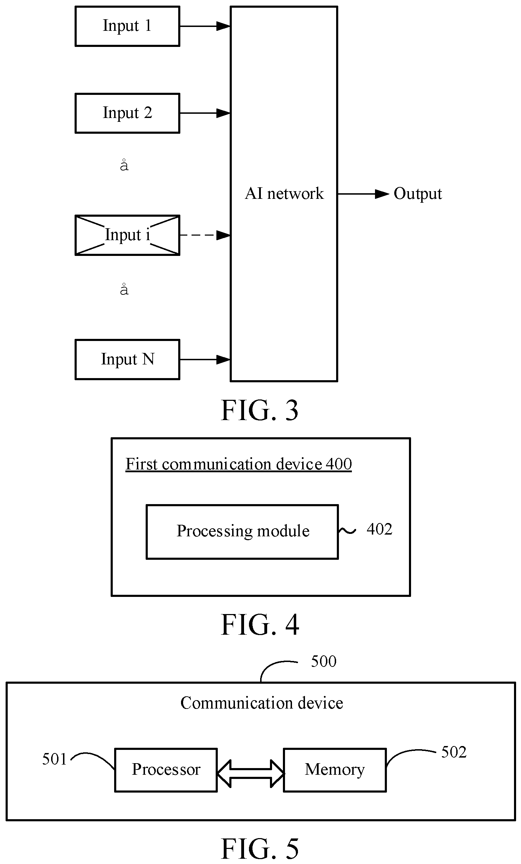

As shown in FIG. 3, FIG. 3 schematically shows an AI network, the AI network may obtain an output according to N inputs, and N is an integer greater than 2.

During actual application, continuity of resource allocation cannot be ensured. For example, a time domain is discontinuous, or a frequency domain is discontinuous. Consequently, input missing may occur. For example, an input i in FIG. 3 is missing. In this case, the foregoing missing input may be replaced with the target input or the default value, and the output of the AI network is obtained with reference to other non-missing inputs.

In an example, the plurality of inputs of the AI network are sorted according to a target sequence. The target input may be one or more inputs before the missing input, or one or more inputs after the missing input, or one or more inputs before the missing input and one or more inputs after the missing input. For example, in the example shown in FIG. 3, a plurality of inputs are sorted according to a sequence of number 1 to number N, and an i-th input is a missing input. In this case, the target input may be an (i-1)-th input, or may be an (i-1)-th input and an (i-2)-th input, or the like. Alternatively, the target input may be an (i+1)-th input, or may be an (i+1)-th input and an (i+2)-th input, or the like. Alternatively, the target input may be an (i-1)-th input and an (i+1)-th input. When there are a plurality of target inputs, an operation, such as an averaging operation, may be further performed on the plurality of target inputs, and then an operation result is used to replace the missing input.

Optionally, the replacing the missing input with a target input to obtain an output of the AI network mentioned in S202 may include: directly replacing the missing input with the target input to obtain the output of the AI network; or performing particular processing, such as mathematical processing or signal processing, on the target input, and replacing the missing input with a processed result to obtain the output of the AI network. Optionally, the mathematical processing includes a combination of various common mathematical operations such as addition, subtraction, multiplication and division, calculation of the K-th power of a number, calculation of the K-th root of a number, a logarithm operation, a derivative operation, and a partial derivative operation. K is an arbitrary number. For example, K may be a positive number or a negative number or 0, a real number or a complex number.

Optionally, the plurality of inputs of the AI network are sorted according to a target sequence (such as by sequence numbers), and the target input includes at least one of the following:
(1) N1 inputs before the sequence number of the missing input, where N1 is 1, 2, 3, .... For example, if an i-th input is missing, an (i-N1)-th input, an (i-N1-1)-th input, ..., and an (i-1)-th input are used for supplementation.
(2) N2 inputs after the sequence number of the missing input, where N2 is 1, 2, 3.... For example, if an i-th input is missing, an (i+1)-th input, an (i+2)-th input, ..., and an (i+N2)-th input are used for supplementation.

The default value mentioned in the embodiments of this specification and used for replacing the missing input includes one of the following: a constant value (for example, 0 or 1), a constant vector, a constant two-dimensional matrix, or a constant multidimensional matrix. The constant vector, the constant two-dimensional matrix, and the constant multidimensional matrix may be determined according to dimensions of the plurality of inputs of the AI network. For example, if each input is a two-dimensional vector, the default value for replacing the missing input is also a constant two-dimensional vector.

In the embodiments of this specification, in a case that there are a plurality of target inputs, the replacing the missing input with a target input to obtain an output of the AI network may specifically include: replacing the missing input with a result obtained after averaging or performing a combinatorial operation on the plurality of target inputs to obtain an output of the AI network.

Similarly, in the embodiments of this specification, in a case that there are a plurality of default values, the replacing the missing input with a default value to obtain an output of the AI network may specifically include: replacing the missing input with a result obtained after averaging or performing a combinatorial operation on the plurality of default values to obtain an output of the AI network.

The averaging mentioned in the foregoing two examples may be linear averaging over a logarithmic domain or a linear domain, geometric averaging, harmonic averaging, squared averaging, weighted averaging, minimum value maximization, maximum value minimization, other common averaging manners, and combinations and simple variations thereof. The combination manners mentioned in the foregoing two example may further include a combination of various common mathematical operations such as addition, subtraction, multiplication and division, calculation of the K-th power of a number, calculation of the K-th root of a number, a logarithm operation, a derivative operation, and a partial derivative operation. K is an arbitrary number. For example, K may be a positive number or a negative number or 0, a real number or a complex number.

In the method for processing partial input missing of an AI network provided in this embodiment of this application, in a case that there is a missing input in a plurality of inputs of the AI network, the first communication device replaces the foregoing missing input with a target input or a default value to obtain an output of the AI network. Setting the target input or the default value can effectively resolve the problem of input missing caused by discontinuous resource allocation in an actual environment, helping improve performance of the AI network and improve performance of a communication system.

In the embodiments of this application, the first communication device may process a target service according to the AI network, and the input or output of the AI network may reflect usage of the AI network to some extent. Optionally, an input and/or an output of the AI network includes one of the following (1) to (10):
(1) Reference signal. For example, the AI network is used for reference signal processing, including reference signal detection, filtering, equalization, and the like. The reference signal may include a demodulation reference signal (DeModulation Reference Signal, DMRS), a sounding reference signal (Sounding Reference Signal, SRS), a synchronization signal and physical broadcast channel block (Synchronization Signal and PBCH Block, SSB), a tracking reference signal (Tracking Reference Signal, TRS), a phase tracking reference signal (Phase Tracking Reference Signal, PTRS), a channel state information-reference signal (Channel State Information-Reference Signal, CSI-RS), or the like.
(2) Channel. For example, the AI network is used for sending and receiving signals, signaling, or data on a channel. The channel includes, for example, a physical downlink control channel (Physical Downlink Control Channel, PDCCH), a physical downlink shared channel (Physical Downlink Shared Channel, PDSCH), a physical uplink control channel (Physical Uplink Control Channel, PUCCH), a physical uplink shared channel (Physical Uplink Shared Channel, PUSCH), a physical random access channel (Physical Random Access Channel, PRACH), or a physical broadcast channel (Physical Broadcast Channel, PBCH).
(3) Channel state information.

For example, the AI network is used for obtaining channel state information. Optionally, the channel state information may include one of the following: channel state information feedback information, or channel state information of frequency division duplexing (Frequency Division Duplexing, FDD) uplink and downlink partial reciprocity.

The channel state information feedback information includes: channel correlation information, channel matrix correlation information, channel feature information, channel matrix feature information, a precoding matrix indicator (Pre-coding Matrix Indicator, PMI), a rank indication (Rank Indication, RI), a channel quality indicator (Channel Quality Indicator, CQI), a channel state information-reference signal resource indicator (CSI-RS Resource Indicator, CRI), a layer indicator (Layer Indicator, LI), or the like.

Regarding the channel state information of FDD uplink and downlink partial reciprocity, in an FDD system, according to the partial reciprocity, the network side device obtains angle and latency information according to an uplink channel, and may notify the terminal of the angle information and the latency information, or other channel state information with partial reciprocity, or directly estimated downlink channel information, by using a channel state information-reference signal (Channel State Information-Reference Signal, CSI-RS) precoding or a direct indication method. The terminal performs reporting according to the indication by the network side device, or performs selection and reporting within a range of the indication by the network side device, or the terminal uses these downlink channel signals, thereby reducing an amount of computation of the terminal and overheads of reporting the channel state information (Channel State Information, CSI).
(4) Beam information. The beam information includes beam quality, beam indication information (a reference signal ID), beam failure indication information, new beam indication information in beam failure recovery, or the like. For example, the AI network is used for beam management, for example, including beam measurement, beam reporting, beam prediction, beam failure detection, beam failure recovery, or new beam indication in beam failure recovery.
(5) Channel prediction information. For example, the AI network is used for channel state information prediction or beam prediction.
(6) Interference information. For example, the AI network is used for evaluating interference information. The interference information, includes, for example: intra-cell interference, inter-cell interference, out-of-band interference, or cross-modulation interference.
(7) Positioning information. For example, the AI network is used for obtaining positioning information of the first communication device. The positioning information may further include track information, where for example, a specific position or a possible future trajectory of a terminal is estimated by using a reference signal (for example, an SRS), and the position may include a horizontal position and/or a vertical position; or information for assisting in position estimation or trajectory estimation.
(8) Prediction information of a higher layer service or parameter. For example, the AI network is used for obtaining prediction information of a higher layer service or parameter. The higher layer service or parameter may include a throughput, a required data packet size, a service requirement, a movement speed, noise information, or the like.
(9) Management information of a higher layer service or parameter. For example, the AI network is used for obtaining management information of a higher layer service or parameter. The higher layer service or parameter may include a throughput, a required data packet size, a service requirement, a movement speed, noise information, or the like.
(10) Control signaling. For example, the AI network is used for generating control signaling, such as signaling related to power control or signaling related to beam management.

Optionally, the one or more resource domains occupied by the plurality of inputs of the AI network mentioned in the embodiments of this application include at least one of the following: a frequency domain, a time domain, a code domain, a spatial domain, a delay domain, a Doppler field, a Fourier Transform domain, an S domain, and a Z domain.

Specifically, in one example, the plurality of inputs of the AI network are a resource block (Resource Block, RB) 1 to an RB N in a frequency domain of a time domain A (for example, a symbol A), where N is a total quantity of the plurality of inputs. The one or more resource domains occupied by the plurality of inputs of the AI network include the frequency domain and the time domain.

The S domain mentioned above is to use an imaginary index exp(jωt) as a fundamental signal in frequency domain analysis and decompose the signal into numerous imaginary index components of different frequencies. The Z domain is a domain obtained after Z-transformation is performed on the reference signal or the like.

In the one or more resource domains occupied by the plurality of inputs of the AI network, a frequency domain resource may be divided by subcarriers, resource blocks (Resource Block, RB), physical resource blocks (Physical Resource Block, PRB), subbands, physical precoding resource block groups (Physical precoding Resource block Group, PRG), or bandwidth parts (Band Width Part, BWP), or in other manners; a time domain resource may be divided by symbols, slots, half-slots, frames, subframes, radio frames, milliseconds, seconds, or other common time units; a code domain resource may be divided by orthogonal codes, quasi-orthogonal codes, or semi-orthogonal codes, or in other manners; and a spatial domain resource may be divided by antennas, antenna elements, antenna panels, transceiver units, beams, layers, ranks, or antenna angles, or in other manners.

Optionally, the embodiments of this specification may further include the following step: sending the output of the AI network to a second communication device, where the first communication device is a terminal, and the second communication device is a network side device; or the first communication device is a network side device, and the second communication device is a terminal; or the first communication device is a terminal, and the second communication device is a terminal; or the first communication device is a network side device, and the second communication device is a network side device.

In this embodiment, the second communication device may process the received output by using a matching AI network, or may process the received output by using a non-AI method, or the received output may be directly used.

To illustrate the target inputs mentioned in the embodiments of this application in detail, description is provided below with reference to a plurality of specific examples.

In one example, the plurality of inputs of the AI network occupy a plurality of resource domains, that is, the missing input also occupies a plurality of resource domains. For example, the plurality of inputs of the AI network are an RB 1 to an RB N in the frequency domain of the symbol A, the missing input is an RB i in the frequency domain of the symbol A, and the one or more resource domains occupied by the missing input include the time domain and the frequency domain. In this case, the target input is obtained according to at least one of the following (1) to (3):
(1) a resource corresponding to the missing input in at least one resource domain of the plurality of resource domains; for example, the symbol A; or the symbol A and the RB i; or the RB i;
(2) one or more resources before the resource corresponding to the missing input in at least one resource domain of the plurality of resource domains; for example, one or more adjacent symbols before the symbol A; or one or more adjacent symbols before the symbol A and one or more adjacent RBs before the RB i; or one or more adjacent RBs before the RB i; or
(3) one or more resources after the resource corresponding to the missing input in at least one resource domain of the plurality of resource domains; for example, one or more adjacent symbols after the symbol A; or one or more adjacent symbols after the symbol A and one or more adjacent RBs after the RB i; or one or more adjacent RBs after the RB i.

In a specific example, the missing input includes a j-th resource in a second resource domain of an i-th resource in a first resource domain. For example, information about a j-th RB of an i-th slot (slot) is missing. The target input includes one of the following (1) to (8):
(1) a (j-M1)-th resource to a (j-1)-th resource in the second resource domain of the i-th resource of the first resource domain. For example, the missing input is a fifth (that is, j=5) RB in a fourth (that is, i=4) slot, and M1=2. In this case, the target input in this example is: a third RB in slot 4 and a fourth RB in slot 4.
(2) a (j+1)-th resource to a (j+M2)-th resource in the second resource domain of the i-th resource of the first resource domain. For example, the missing input is a fifth (that is, j=5) RB in a fourth (that is, i=4) slot, and M2=2. In this case, the target input in this example is: a sixth RB in slot 4 and a seventh RB in slot 4.
(3) a j-th resource in the second resource domain of an (i-N1)-th resource to an (i-1)-th resource in the first resource domain.
(4) a (j-M1)-th resource to a (j-1)-th resource in the second resource domain of an (i-N1)-th resource to an (i-1)-th resource in the first resource domain. For example, the missing input is a fifth (that is, j=5) RB in a fourth (that is, i=4) slot, N1=2, and M1=2. In this case, the target input in this example is: a third RB in slot 2 and a fourth RB in slot 2, and a third RB in slot 3 and a fourth RB in slot 3. Optionally, the value of N1 may be different for different resources in the first resource domain, or the value of M1 may be different for different resources in the second resource domain.
(5) a (j+1)-th resource to a (j+M2)-th resource in the second resource domain of an (i-N1)-th resource to an (i-1)-th resource in the first resource domain. Optionally, the value of N1 may be different for different resources in the first resource domain, or the value of M1 may be different for different resources in the second resource domain.
(6) a j-th resource in the second resource domain of an (i+1)-th resource to an (i+N1)-th resource in the first resource domain.
(7) a (j-M1)-th resource to a (j-1)-th resource in the second resource domain of an (i+1)-th resource to an (i+N1)-th resource in the first resource domain. Optionally, the value of N1 may be different for different resources in the first resource domain, or the value of M1 may be different for different resources in the second resource domain.
(8) a (j+1)-th resource to a (j+M2)-th resource in the second resource domain of an (i+1)-th resource to an (i+N1)-th resource in the first resource domain. Optionally, the value of N1 may be different for different resources in the first resource domain, or the value of M1 may be different for different resources in the second resource domain.

In the foregoing examples, i, j, N1, and M1 mentioned are each a positive integer. In the foregoing different examples, the values of i, j, N1, and M1 may be the same or may be different respectively.

In a specific example, the one or more resource domains occupied by the plurality of inputs of the AI network include the first resource domain (for example, the time domain) and the second resource domain (for example, the frequency domain). The missing input includes a plurality of adjacent second resources in the second resource domain of the first resource in the first resource domain. For example, the plurality of inputs of the AI network are an RB 1 to an RB N in a frequency domain of a symbol 5, and the missing input is an RB i, an RB (i-1), and an RB (i+1) in the frequency domain of the symbol 5. The target input is a plurality of the second resources in the second resource domain of a resource near the first resource in the first resource domain. For example, the target input is an RB i, an RB (i-1), and an RB (i+1) in a frequency domain of a symbol 4; or the target input is an RB i, an RB (i-1), and an RB (i+1) in a frequency domain of a symbol 3; or the target input is an RB i, an RB (i-1), and an RB (i+1) in a frequency domain of a symbol 6; or the target input is an RB i, an RB (i-1), and an RB (i+1) in a frequency domain of a symbol 7. Alternatively, the target input is a plurality of collections of the foregoing one or more examples. For example, the target input is an RB i, an RB (i-1), and an RB (i+1) in a frequency domain of a symbol 4, and an RB i, an RB (i-1), and an RB (i+1) in a frequency domain of a symbol 6.

It should be noted that, although the resource "near" the first resource is mentioned herein, during actual application, "near" herein may be defined by a particular threshold, for example, X1 adjacent resources before the first resource, or X2 adjacent resources after the first resource, where X1 and X2 are each a positive integer.

In an example, the missing input includes a plurality of adjacent inputs, and the target input is the first input before or after the missing input. For example, the plurality of inputs of the AI network are an RB 1 to an RB N in the frequency domain, and an i-th input (that is, an RB i) is missing, which should have been supplemented by an RB i-1. However, in this case, both the RB i and the R i-1 are missing, and therefore, the RB i-1 is replaced by an RB i-2.

In another example, the missing input includes a plurality of adjacent inputs, and the target input is a target input of the first or the last input in the plurality of adjacent inputs. In this example, a target input may be preset for each input of the AI network. For example, if i, (i+1), ..., and (i+M) of an A domain are all missing, a target input of these missing inputs is an i-th inputted target input or an (i+M)-th inputted target input.

Optionally, the foregoing embodiments may further include the following step: if the target input is missing or part of the target input is missing, replacing the target input with an input near the target input or a next-level target input of the target input to obtain an output of the AI network. For example, the plurality of missing inputs are not next to each other (not missing consecutively), but a target input of a particular input is missing or part of the target input is missing. In this case, an input near the target input is used for supplementation, or a next-level target input of the target input is used for supplementation. In this example, for each input of the AI network, a target input may be preset or a rule to find a target input may be preset.

Optionally, the first communication device does not expect or the AI network does not allow occurrence of at least one of the following: (1) consecutive missing of adjacent inputs; (2) more than K1 consecutive missing inputs; or (3) more than K2 missing inputs in all, where K1 and K2 are each an integer greater than or equal to 2.

Optionally, processing manners may be different for different domains. For example, consecutive missing is not allowed for the time domain. For example, consecutive missing may be allowed for the frequency domain. K1 and K2 in the foregoing description are related to a channel environment, a capability of the first communication device, and a network configuration. For example, the foregoing case cannot occur during resource configuration for a network/a terminal.

Optionally, the foregoing embodiments further include: no longer using the AI network if at least one of the following occurs: (1) consecutive missing of adjacent inputs; (2) more than K1 consecutive missing inputs; or (3) more than K2 missing inputs in all, where K1 and K2 are each an integer greater than or equal to 2.

For example, when the foregoing case occurs, other methods such as other AI algorithms or other non-AI algorithms are used. For example, in CSI feedback, the AI method is no longer used; instead, a conventional Type I/Type II codebook is used.

Optionally, the AI network allows the missing input to satisfy a specific pattern or rule. For example, some specific input missing patterns or rules are allowed. For example, N2 inputs are allowed to be missing for every N1 inputs.

Considering different terminal capabilities, some first communication devices allow occurrence of a missing input, while some first communication devices do not support occurrence of a missing input. Optionally, juxtaposed with the foregoing embodiments, in some cases, the method further includes: no longer using the AI network if a missing input occurs in the AI network, where the first communication device does not expect or the AI network does not allow occurrence of a missing input.

Optionally, the foregoing embodiments may further include the following step: sending at least one of the following to a second communication device: (1) an identifier of the missing input; (2) a quantity of the missing input; (3) a pattern or a rule of the missing input; (4) the output obtained by using an AI algorithm or a non-AI algorithm other than the AI network; or (5) a performance loss caused by the missing input, such as a signal-to-noise ratio, a signal to interference plus noise ratio, power, interference, noise, a throughput, or an MCS.

The foregoing indication information may be additional output information of the AI network, or the indication information is included in the existing output of the AI network. The second communication device can obtain required information by inputting the indication information into the AI network. For the former, whether an input is missing affects overheads of output information of the AI network.

It should be noted that, the method for processing partial input missing of an AI network provided in this embodiment of this application may be performed by the first communication device or a control module in the first communication device for performing the method for processing partial input missing of an AI network. In the embodiments of this application, the first communication device provided in this embodiment of this application is described by using an example in which the first communication device performs the method for processing partial input missing of an AI network.

FIG. 4 is a schematic structural diagram of a first communication device according to an embodiment of this application. As shown in FIG. 4, the first communication device 400 includes: a processing module 402, which may be configured to: in a case that there is a missing input in a plurality of inputs of an AI network, replace the missing input with a target input or a default value to obtain an output of the AI network.

In this embodiment of this application, in a case that there is a missing input in a plurality of inputs of the AI network, the first communication device replaces the foregoing missing input with a target input or a default value to obtain an output of the AI network. Setting the target input or the default value can effectively resolve the problem of input missing caused by discontinuous resource allocation in an actual environment, helping improve performance of the AI network and improve performance of a communication system.

Optionally, in an embodiment, the target input includes at least one of the following: one or more inputs before the missing input; and one or more inputs after the missing input, where the plurality of inputs of the AI network are sorted according to a target sequence.

Optionally, in an embodiment, one or more resource domains occupied by the plurality of inputs of the AI network include at least one of the following: a frequency domain, a time domain, a code domain, a spatial domain, a delay domain, a Doppler field, a Fourier Transform domain, an S domain, and a Z domain.

Optionally, in an embodiment, the missing input occupies a plurality of resource domains, and the target input is obtained according to at least one of the following: (1) a resource corresponding to the missing input in at least one resource domain of the plurality of resource domains; (2) one or more resources before the resource corresponding to the missing input in at least one resource domain of the plurality of resource domains; and (3) one or more resources after the resource corresponding to the missing input in at least one resource domain of the plurality of resource domains.

Optionally, in an embodiment, the missing input includes a j-th resource in a second resource domain of an i-th resource in a first resource domain, and the target input includes one of the following (1) to (8): (1) a (j-M1)-th resource to a (j-1)-th resource in the second resource domain of the i-th resource of the first resource domain; (2) a (j+1)-th resource to a (j+M2)-th resource in the second resource domain of the i-th resource of the first resource domain; (3) a j-th resource in the second resource domain of an (i-N1)-th resource to an (i-1)-th resource in the first resource domain; (4) a (j-M1)-th resource to a (j-1)-th resource in the second resource domain of an (i-N1)-th resource to an (i-1)-th resource in the first resource domain; (5) a (j+1)-th resource to a (j+M2)-th resource in the second resource domain of an (i-N1)-th resource to an (i-1)-th resource in the first resource domain; (6) a j-th resource in the second resource domain of an (i+1)-th resource to an (i+N1)-th resource in the first resource domain; (7) a (j-M1)-th resource to a (j-1)-th resource in the second resource domain of an (i+1)-th resource to an (i+N1)-th resource in the first resource domain; or (8) a (j+1)-th resource to a (j+M2)-th resource in the second resource domain of an (i+1)-th resource to an (i+N1)-th resource in the first resource domain, where i, j, N1, and M1 are each a positive integer.

Optionally, in an embodiment, there are a plurality of target inputs, and the processing module 402 is configured to: replace the missing input with a result obtained after averaging or performing a combinatorial operation on the plurality of target inputs to obtain an output of the AI network.

Optionally, in an embodiment, the default value includes one of the following: a constant value, a constant vector, a constant two-dimensional matrix, or a constant multidimensional matrix.

Optionally, in an embodiment, one or more resource domains occupied by the plurality of inputs of the AI network include a first resource domain and a second resource domain, where the missing input includes a plurality of adjacent second resources in the second resource domain of a first resource in the first resource domain; and the target input is a plurality of the second resources in the second resource domain of a resource near the first resource in the first resource domain.

Optionally, in an embodiment, the missing input includes a plurality of adjacent inputs, and the target input is the first input before or after the missing input; or the missing input includes a plurality of adjacent inputs, and the target input is a target input of the first or the last input in the plurality of adjacent inputs.

Optionally, in an embodiment, the processing module 402 is further configured to: if the target input is missing or part of the target input is missing, replace the target input with an input near the target input or a next-level target input of the target input to obtain an output of the AI network.

Optionally, in an embodiment, the first communication device does not expect or the AI network does not allow occurrence of at least one of the following: consecutive missing of adjacent inputs; more than K1 consecutive missing inputs; or more than K2 missing inputs in all, where K1 and K2 are each an integer greater than or equal to 2.

Optionally, in an embodiment, the processing module 402 is further configured to: no longer use the AI network if at least one of the following occurs: consecutive missing of adjacent inputs; more than K1 consecutive missing inputs; or more than K2 missing inputs in all, where K1 and K2 are each an integer greater than or equal to 2.

Optionally, in an embodiment, the AI network allows the missing input to satisfy a specific pattern or rule.

Optionally, in an embodiment, the processing module 402 is further configured to: no longer use the AI network if a missing input occurs in the AI network, where the first communication device does not expect or the AI network does not allow occurrence of a missing input.

Optionally, in an embodiment, the first communication device 400 further includes a sending module, configured to send at least one of the following to a second communication device: an identifier of the missing input; a quantity of the missing input; a pattern or a rule of the missing input; the output obtained by using an AI algorithm or a non-AI algorithm other than the AI network; or a performance loss caused by the missing input.

Optionally, in an embodiment, the input and/or the output of the AI network includes one of the following: a reference signal, a channel, channel state information, beam information, channel prediction information, interference information, positioning information, prediction information of a higher layer service or parameter, management information of a higher layer service or parameter, or control signaling.

Optionally, in an embodiment, the first communication device 400 further includes a sending module, configured to send the output of the AI network to a second communication device, where the first communication device 400 is a terminal, and the second communication device is a network side device; or the first communication device 400 is a network side device, and the second communication device is a terminal; or the first communication device 400 is a terminal, and the second communication device is a terminal; or the first communication device 400 is a network side device, and the second communication device is a network side device.

The first communication device 400 according to an embodiment of this application may reference to a procedure corresponding to the method 200 of the embodiments of this application. In addition, the unit/modules in the first communication device 400 and the foregoing other operations and/or functions are each intended to implement a corresponding procedure in the method 200, and can reach the same or equivalent technical effect. For brevity, details are not described herein.

The first communication device in this embodiment of this application may be an apparatus, or may be a component, an integrated circuit, or a chip in a terminal. The apparatus may be a mobile terminal, or may be a non-mobile terminal. For example, the mobile terminal may include, but is not limited to the types of terminals 11 listed above. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The first communication device in this embodiment of this application may be an apparatus with an operating system. The operating system may be an Android (Android) operating system, an iOS operating system, or another possible operating system. This is not specifically limited in this embodiment of this application.

The first communication device provided in this embodiment of this application can implement the processes implemented by the method embodiment of FIG. 2 and achieve the same technical effect. To avoid repetition, details are not described herein again.

Optionally, as shown in FIG. 5, an embodiment of this application further provides a communication device 500, including a processor 501, a memory 502, and a program or an instruction stored in the memory 502 and executable on the processor 501. For example, when the communication device 500 is a terminal, and when the program or the instruction is executed by the processor 501, the processes of the foregoing embodiment of the method for processing partial input missing of an AI network is implemented, and the same technical effect can be achieved. When the communication device 500 is a network side device, and when the program or the instruction is executed by the processor 501, the processes of the foregoing embodiment of the method for processing partial input missing of an AI network is implemented, and the same technical effect can be achieved. To avoid repetition, details are not described herein again.

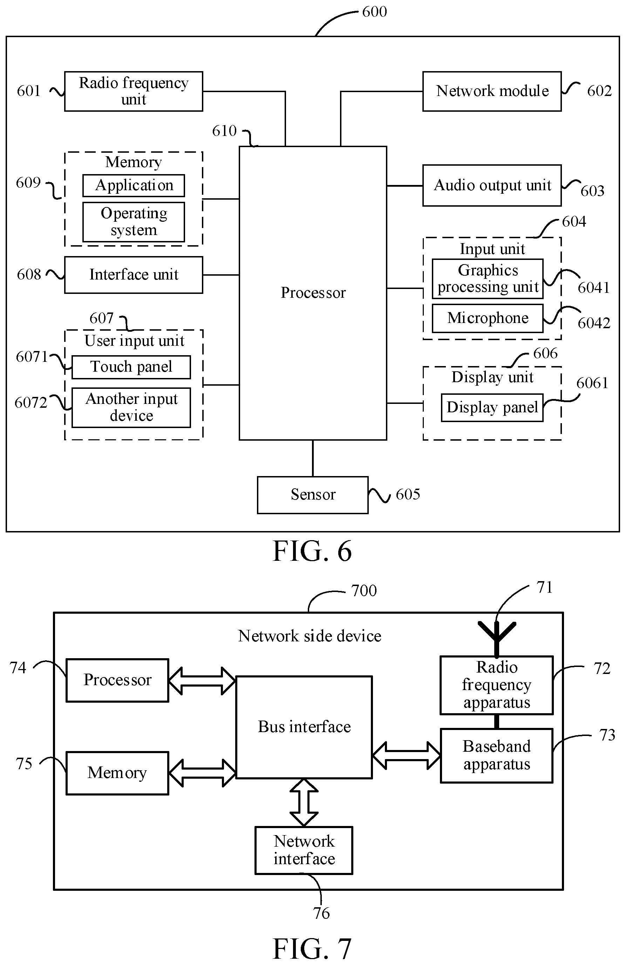

FIG. 6 is a schematic structural diagram of a terminal that implements an embodiment of this application.

The terminal 600 includes, but is not limited to: a radio frequency unit 601, a network module 602, an audio output unit 603, an input unit 604, a sensor 605, a display unit 606, a user input unit 607, an interface unit 608, a memory 609, a processor 610, and other components.

A person skilled in the art may understand that, the terminal 600 may further include a power supply (such as a battery) for supplying power to each component. The power supply may be logically connected to the processor 610 by using a power management system, thereby implementing functions, such as charging, discharging, and power consumption management, by using the power management system. The structure of the terminal shown in FIG. 6 does not constitute a limitation to the terminal, and the terminal may include more or fewer components than those shown in the figure, or some components may be combined, or a different component deployment may be used. Details are not described herein.

It should be understood that, in this embodiment of this application, the input unit 604 may include a graphics processing unit (Graphics Processing Unit, GPU) 6041 and a microphone 6042. The graphics processing unit 6041 processes image data from static pictures or videos captured by an image capture apparatus (such as a camera) in a video capture mode or an image capture mode. The display unit 606 may include a display panel 6061. The display panel 6061 may be configured in a form of a liquid crystal display, an organic light-emitting diode, or the like. The user input unit 607 includes a touch panel 6071 and another input device 6072. The touch panel 6071 is also referred to as a touchscreen. The touch panel 6071 may include two parts: a touch detection apparatus and a touch controller. The another input device 6072 may include, but is not limited to, a physical keyboard, a functional button (such as a sound volume control button or a power button), a trackball, a mouse, or a joystick. Details are not described herein.

In this embodiment of this application, the radio frequency unit 601 receives downlink data from the network side device and then sends the data to the processor 610 for processing; and additionally, sends uplink data to the network side device. Usually, the radio frequency unit 601 includes, but is not limited to, an antenna, at least one amplifier, a transceiver, a coupler, a low noise amplifier, a duplexer, and the like.

The memory 609 may be configured to store a software program or instruction and various data. The memory 609 may mainly include an area for storing programs or instructions and a data storage area. The area for storing programs or instructions may store an operating system, and an application or an instruction (such as a sound playing function or an image playing function) required for at least one function. In addition, the memory 609 may include a high speed random access memory, and may also include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, such as at least one magnetic disk storage device, a flash memory device, or another non-volatile solid-state storage device.

The processor 610 may include one or more processing units. Optionally, the processor 610 may integrate an application processor and a modem processor. The application processor mainly processes the operating system, a user interface, the application program or instruction, and the like. The modem processor mainly processes wireless communication, and for example, is a baseband processor. It may be understood that, the modem processor may alternatively not be integrated in the processor 610.

The processor 610 is configured to: in a case that there is a missing input in a plurality of inputs of an AI network, replace the missing input with a target input or a default value to obtain an output of the AI network.

In this embodiment of this application, in a case that there is a missing input in a plurality of inputs of the AI network, the terminal replaces the foregoing missing input with a target input or a default value to obtain an output of the AI network. Setting the target input or the default value can effectively resolve the problem of input missing caused by discontinuous resource allocation in an actual environment, helping improve performance of the AI network and improve performance of a communication system.

The terminal 600 provided in this embodiment of this application can further implement the processes of the foregoing embodiment of the method for processing partial input missing of an AI network, and the same technical effect can be achieved. To avoid repetition, details are not described herein again.

Specifically, an embodiment of this application further provides a network side device. As shown in FIG. 7, the network side device 700 includes: an antenna 71, a radio frequency apparatus 72, and a baseband apparatus 73. The antenna 71 is connected to the radio frequency apparatus 72. In an uplink direction, the radio frequency apparatus 72 receives information through the antenna 71, and sends the received information to the baseband apparatus 73 for processing. In a downlink direction, the baseband apparatus 73 processes information to be send, and sends the processed information to the radio frequency apparatus 72. The radio frequency apparatus 72 processes the received information, and then sends out the processed information through the antenna 71.

The foregoing frequency band processing apparatus may be located in the baseband apparatus 73. In the foregoing embodiment, the method performed by the network side device may be implemented in the baseband apparatus 73. The baseband apparatus 73 includes a processor 74 and a memory 75.

The baseband apparatus 73 may include, for example, at least one baseband board, and the baseband board is provided with a plurality of chips. As shown in FIG. 7, one of the chips is, for example, the processor 74, connected to the memory 75 to call a program in the memory 75, to perform the operations of the network side device shown in the foregoing method embodiment.

The baseband apparatus 73 may further include a network interface 76, configured to exchange information with the radio frequency apparatus 72. The interface is, for example, a common public radio interface (common public radio interface, CPRI for short).

Specifically, the network side device in this embodiment of this application further includes: an instruction or a program stored in the memory 75 and executable on the processor 74. The processor 74 calls the instruction or the program in the memory 75 to perform the method performed by each module shown in FIG. 4, and achieve the same technical effect. To avoid repetition, details are not described herein again.

An embodiment of this application further provides a readable storage medium. The readable storage medium stores a program or an instruction. When the program or the instruction is executed by a processor, the processes of the foregoing embodiment of the method for processing partial input missing of an AI network is implemented, and the same technical effect can be achieved. To avoid repetition, details are not described herein again.

The processor may be the processor in the terminal described in the foregoing embodiment. The readable storage medium includes a computer-readable storage medium, such as a computer read-only memory (Read-Only Memory, ROM), random access memory (Random Access Memory, RAM), a magnetic disk, an optical disc, and the like.

An embodiment of this application further provides a chip. The chip includes a processor and a communication interface. The communication interface is coupled to the processor. The processor is configured to run a program or an instruction, to implement the processes of the foregoing embodiment of the method for processing partial input missing of an AI network, and the same technical effect can be achieved. To avoid repetition, details are not described herein again.

It should be understood that, the chip mentioned in this embodiment of this application may also be referred to as a system on a chip, a system chip, a chip system, a system-on-chip, or the like.

An embodiment of this application further provides a computer program product. The computer program product is stored in a non-volatile memory. The computer program product is executed by at least one processor to implement the processes of the foregoing embodiment of the method for processing partial input missing of an AI network, and the same technical effect can be achieved. To avoid repetition, details are not described herein again.

An embodiment of this application further provides a communication device, configured to perform the processes in the foregoing embodiment of the method for processing partial input missing of an AI network, and the same technical effect can be achieved. To avoid repetition, details are not described herein again.

It should be noted that, terms "including", "comprising", or any other variants thereof herein are intended to cover non-exclusive inclusion, so that a process, method, article, or device including a series of elements includes not only those elements but also other elements not explicitly listed, or elements inherent to such a process, method, article, or device. Without more restrictions, the elements defined by the sentence "including a..." do not exclude the existence of other identical elements in the process, method, article, or device including the elements. In addition, it should be noted that, the scope of the methods and apparatuses in the implementations of this application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions in the foregoing implementations, a person skilled in the art may clearly learn that the method according to the foregoing embodiment may be implemented by software plus a necessary universal hardware platform, or by using hardware, but in many cases, the former is a preferred implementation. Based on such an understanding, the technical solutions of this application essentially, or the part contributing to the prior art, may be presented in the form of a software product. The computer software product is stored in a storage medium (such as a ROM/RAM, a magnetic disk, or an optical disc) including several instructions to enable a terminal (which may be a mobile phone, a computer, a server, an air conditioner, a network side device, or the like) to perform the methods described in the embodiments of this application.

The embodiments of this application have been described above with reference to the accompanying drawings, but this application is not limited to the foregoing specific implementations. The foregoing specific implementations are only illustrative and not restrictive. Under the inspiration of this application, without departing from the purpose of this application and the scope of protection of the claims, a person of ordinary skill in the art can still make many forms, which all fall within the protection of this application.

## Claims

1. A method for processing partial input missing of an AI network, wherein the method comprises:
in a case that there is a missing input in a plurality of inputs of an artificial intelligence AI network, replacing, by a first communication device, the missing input with a target input or a default value to obtain an output of the AI network.

2. The method according to claim 1, wherein the target input comprises at least one of the following:
one or more inputs before the missing input; and
one or more inputs after the missing input, wherein
the plurality of inputs of the AI network are sorted according to a target sequence.

3. The method according to claim 1, wherein one or more resource domains occupied by the plurality of inputs of the AI network comprise at least one of the following: a frequency domain, a time domain, a code domain, a spatial domain, a delay domain, a Doppler field, a Fourier Transform domain, an S domain, and a Z domain.

4. The method according to claim 1, wherein the missing input occupies a plurality of resource domains, and the target input is obtained according to at least one of the following:
a resource corresponding to the missing input in at least one resource domain of the plurality of resource domains;
one or more resources before the resource corresponding to the missing input in at least one resource domain of the plurality of resource domains; and
one or more resources after the resource corresponding to the missing input in at least one resource domain of the plurality of resource domains.

5. The method according to claim 4, wherein the missing input comprises a j-th resource in a second resource domain of an i-th resource in a first resource domain, and the target input comprises one of the following:
a (j-M1)-th resource to a (j-1)-th resource in the second resource domain of the i-th resource of the first resource domain;
a (j+1)-th resource to a (j+M2)-th resource in the second resource domain of the i-th resource of the first resource domain;
a j-th resource in the second resource domain of an (i-N1)-th resource to an (i-1)-th resource in the first resource domain;
a (j-M1)-th resource to a (j-1)-th resource in the second resource domain of an (i-N1)-th resource to an (i-1)-th resource in the first resource domain;
a (j+1)-th resource to a (j+M2)-th resource in the second resource domain of an (i-N1)-th resource to an (i-1)-th resource in the first resource domain;
a j-th resource in the second resource domain of an (i+1)-th resource to an (i+N1)-th resource in the first resource domain;
a (j-M1)-th resource to a (j-1)-th resource in the second resource domain of an (i+1)-th resource to an (i+N1)-th resource in the first resource domain; or
a (j+1)-th resource to a (j+M2)-th resource in the second resource domain of an (i+1)-th resource to an (i+N1)-th resource in the first resource domain, wherein
i, j, N1, and M1 are each a positive integer.

6. The method according to any one of claims 1 to 5, wherein there are a plurality of target inputs, and the replacing, by a first communication device, the missing input with a target input to obtain an output of the AI network comprises:
replacing the missing input with a result obtained after averaging or performing a combinatorial operation on the plurality of target inputs to obtain an output of the AI network.

7. The method according to claim 1, wherein the default value comprises one of the following:
a constant value, a constant vector, a constant two-dimensional matrix, or a constant multidimensional matrix.

8. The method according to claim 1, wherein one or more resource domains occupied by the plurality of inputs of the AI network comprise a first resource domain and a second resource domain, wherein
the missing input comprises a plurality of adjacent second resources in the second resource domain of a first resource in the first resource domain; and
the target input is a plurality of the second resources in the second resource domain of a resource near the first resource in the first resource domain.

9. The method according to claim 1, wherein
the missing input includes a plurality of adjacent inputs, and the target input is the first input before or after the missing input; or
the missing input includes a plurality of adjacent inputs, and the target input is a target input of the first or the last input in the plurality of adjacent inputs.

10. The method according to claim 1, wherein the method further comprises:
if the target input is missing or part of the target input is missing, replacing the target input with an input near the target input or a next-level target input of the target input to obtain an output of the AI network.

11. The method according to claim 1, wherein the first communication device does not expect or the AI network does not allow occurrence of at least one of the following:
consecutive missing of adjacent inputs;
more than K1 consecutive missing inputs; or
more than K2 missing inputs in all, wherein
K1 and K2 are each an integer greater than or equal to 2.

12. The method according to claim 1, wherein the method further comprises: no longer using the AI network if at least one of the following occurs:
consecutive missing of adjacent inputs;
more than K1 consecutive missing inputs; or
more than K2 missing inputs in all, wherein
K1 and K2 are each an integer greater than or equal to 2.

13. The method according to claim 1, wherein the AI network allows the missing input to satisfy a specific pattern or rule.

14. The method according to claim 1, wherein the method further comprises: no longer using the AI network if a missing input occurs in the AI network, wherein
the first communication device does not expect or the AI network does not allow occurrence of a missing input.

15. The method according to claim 1, wherein the method further comprises: sending at least one of the following to a second communication device:
an identifier of the missing input;
a quantity of the missing input;
a pattern or a rule of the missing input;
the output obtained by using an AI algorithm or a non-AI algorithm other than the AI network; or
a performance loss caused by the missing input.

16. The method according to claim 1, wherein an input and/or an output of the AI network comprises one of the following:
a reference signal, a channel, channel state information, beam information, channel prediction information, interference information, positioning information, prediction information of a higher layer service or parameter, management information of a higher layer service or parameter, or control signaling.

17. The method according to claim 1, wherein the method further comprises: sending the output of the AI network to a second communication device, wherein
the first communication device is a terminal, and the second communication device is a network side device; or
the first communication device is a network side device, and the second communication device is a terminal; or
the first communication device is a terminal, and the second communication device is a terminal; or
the first communication device is a network side device, and the second communication device is a network side device.

18. A first communication device, comprising:
a processing module, configured to: in a case that there is a missing input in a plurality of inputs of an AI network, replace the missing input with a target input or a default value to obtain an output of the AI network.

19. The first communication device according to claim 18, wherein the target input comprises at least one of the following:
one or more inputs before the missing input; and
one or more inputs after the missing input, wherein
the plurality of inputs of the AI network are sorted according to a target sequence.

20. The first communication device according to claim 18, wherein one or more resource domains occupied by the plurality of inputs of the AI network comprise at least one of the following: a frequency domain, a time domain, a code domain, a spatial domain, a delay domain, a Doppler field, a Fourier Transform domain, an S domain, and a Z domain.

21. The first communication device according to claim 18, wherein the missing input occupies a plurality of resource domains, and the target input is obtained according to at least one of the following:
a resource corresponding to the missing input in at least one resource domain of the plurality of resource domains;
one or more resources before the resource corresponding to the missing input in at least one resource domain of the plurality of resource domains; and
one or more resources after the resource corresponding to the missing input in at least one resource domain of the plurality of resource domains.

22. The first communication device according to claim 21, wherein the missing input comprises a j-th resource in a second resource domain of an i-th resource in a first resource domain, and the target input comprises one of the following:
a (j-M1)-th resource to a (j-1)-th resource in the second resource domain of the i-th resource of the first resource domain;
a (j+1)-th resource to a (j+M2)-th resource in the second resource domain of the i-th resource of the first resource domain;
a j-th resource in the second resource domain of an (i-N1)-th resource to an (i-1)-th resource in the first resource domain;
a (j-M1)-th resource to a (j-1)-th resource in the second resource domain of an (i-N1)-th resource to an (i-1)-th resource in the first resource domain;
a (j+1)-th resource to a (j+M2)-th resource in the second resource domain of an (i-N1)-th resource to an (i-1)-th resource in the first resource domain;
a j-th resource in the second resource domain of an (i+1)-th resource to an (i+N1)-th resource in the first resource domain;
a (j-M1)-th resource to a (j-1)-th resource in the second resource domain of an (i+1)-th resource to an (i+N1)-th resource in the first resource domain; or
a (j+1)-th resource to a (j+M2)-th resource in the second resource domain of an (i+1)-th resource to an (i+N1)-th resource in the first resource domain, wherein
i, j, N1, and M1 are each a positive integer.

23. The first communication device according to any one of claims 18 to 22, wherein there are a plurality of target inputs, and the processing module is configured to:
replace the missing input with a result obtained after averaging or performing a combinatorial operation on the plurality of target inputs to obtain an output of the AI network.

24. The first communication device according to claim 18, wherein the default value comprises one of the following:
a constant value, a constant vector, a constant two-dimensional matrix, or a constant multidimensional matrix.

25. The first communication device according to claim 18, wherein one or more resource domains occupied by the plurality of inputs of the AI network comprise a first resource domain and a second resource domain, wherein
the missing input comprises a plurality of adjacent second resources in the second resource domain of a first resource in the first resource domain; and
the target input is a plurality of the second resources in the second resource domain of a resource near the first resource in the first resource domain.

26. The first communication device according to claim 18, wherein
the missing input includes a plurality of adjacent inputs, and the target input is the first input before or after the missing input; or
the missing input includes a plurality of adjacent inputs, and the target input is a target input of the first or the last input in the plurality of adjacent inputs.

27. The first communication device according to claim 18, wherein the processing module is further configured to:
if the target input is missing or part of the target input is missing, replace the target input with an input near the target input or a next-level target input of the target input to obtain an output of the AI network.

28. The first communication device according to claim 18, wherein the first communication device does not expect or the AI network does not allow occurrence of at least one of the following:
consecutive missing of adjacent inputs;
more than K1 consecutive missing inputs; or
more than K2 missing inputs in all, wherein
K1 and K2 are each an integer greater than or equal to 2.

29. The first communication device according to claim 18, wherein the processing module is further configured to: no longer use the AI network if at least one of the following occurs:
consecutive missing of adjacent inputs;
more than K1 consecutive missing inputs; or
more than K2 missing inputs in all, wherein
K1 and K2 are each an integer greater than or equal to 2.

30. The first communication device according to claim 18, wherein the AI network allows the missing input to satisfy a specific pattern or rule.

31. The first communication device according to claim 18, wherein the processing module is further configured to: no longer use the AI network if a missing input occurs in the AI network, wherein
the first communication device does not expect or the AI network does not allow occurrence of a missing input.

32. The first communication device according to claim 18, wherein the first communication device further comprises a sending module, configured to send at least one of the following to a second communication device:
an identifier of the missing input;
a quantity of the missing input;
a pattern or a rule of the missing input;
the output obtained by using an AI algorithm or a non-AI algorithm other than the AI network; or
a performance loss caused by the missing input.

33. The first communication device according to claim 18, wherein the input and/or the output of the AI network comprises one of the following:
a reference signal, a channel, channel state information, beam information, channel prediction information, interference information, positioning information, prediction information of a higher layer service or parameter, management information of a higher layer service or parameter, or control signaling.

34. The first communication device according to claim 18, wherein the first communication device further comprises a sending module, configured to send the output of the AI network to a second communication device, wherein
the first communication device is a terminal, and the second communication device is a network side device; or
the first communication device is a network side device, and the second communication device is a terminal; or
the first communication device is a terminal, and the second communication device is a terminal; or
the first communication device is a network side device, and the second communication device is a network side device.

35. A terminal, comprising a processor, a memory, and a program or an instruction stored in the memory and executable on the processor, wherein when the program or the instruction is executed by the processor, the method for processing partial input missing of an AI network according to any one of claims 1 to 17 is implemented.

36. A network side device, comprising a processor, a memory, and a program or an instruction stored in the memory and executable on the processor, wherein when the program or the instruction is executed by the processor, the method for processing partial input missing of an AI network according to any one of claims 1 to 17 is implemented.

37. A readable storage medium, wherein the readable storage medium stores a program or an instruction, and when the program or the instruction is executed by a processor, the method for processing partial input missing of an AI network according to any one of claims 1 to 17 is implemented.
